(19) Europäisches Patentamt
European Patent Office
Office européen des brevets

(11) EP 0 686 425 B1

(12) **EUROPEAN PATENT SPECIFICATION**

(45) Date of publication and mention of the grant of the patent:
**19.03.2003 Bulletin 2003/12**

(21) Application number: **95903935.5**

(22) Date of filing: **22.12.1994**

(51) Int Cl.7: **B01J 13/02**, A01N 47/46, A01N 43/10, A01N 43/80, A01N 47/22, A01N 47/24, B01J 13/16, A01N 25/28

(86) International application number:
**PCT/JP94/02185**

(87) International publication number:
**WO 95/017954 (06.07.1995 Gazette 1995/29)**

(54) **PROCESS FOR PRODUCING MICROCAPSULE OF HYDROPHOBIC DRUG**

VERFAHREN ZUR HERSTELLUNG EINER MIKROKAPSEL EINES HYDROPHOBEN HEILMITTELS

PROCEDE DE PRODUCTION D'UNE MICROCAPSULE D'UN MEDICAMENT HYDROPHOBE

(84) Designated Contracting States:
**DE FR**

(30) Priority: **28.12.1993 JP 35363393**

(43) Date of publication of application:
**13.12.1995 Bulletin 1995/50**

(73) Proprietor: **OTSUKA KAGAKU KABUSHIKI KAISHA**
**Osaka-shi, Osaka 540 (JP)**

(72) Inventor: **SAKAI, Mamoru**
**Saitama 336 (JP)**

(74) Representative:
**Weinhold, Peter, Dr.rer.nat. Dipl.-Chem. et al**
**Winter, Brandl, Fürniss, Hübner,**
**Röss, Kaiser, Polte**
**Partnerschaft**
**Patent- und Rechtsanwaltskanzlei**
**Alois-Steinecker-Strasse 22**
**85354 Freising (DE)**

(56) References cited:
**FR-A- 1 528 249**
**FR-A- 2 412 346**
**JP-A- 4 039 363**
**JP-A- 59 167 566**
**JP-A- 61 189 201**
**JP-B- 47 043 740**
**US-A- 4 783 221**
**US-A- 5 225 118**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 686 425 B1

Printed by Jouve, 75001 PARIS (FR)

## Description

The present invention relates to a method for manufacturing microcapsules each comprising an urea resin shell and a hydrophobic chemical as a core material.

A variety of techniques have been contrived in connection with microcapsules, and as one of the effective techniques, the utilization of isocyanate compounds is well known. It is known by Fr. P. 1,278,621 (1961), B. P. 1,142,556 (1969), B.P. 1, 371, 179 (1973), Japanese Unexamined Patent Publications (Kokai) Nos. 49-39579, 48-4643, 53-4029, 54-4282, 54-129123, 54-32631, 55-43073, 55-38325, Japanese Examined Patent Publications (Kokoku) Nos. 55-42964, 55-3969, USP 4,285,720(1981), USP 4,280,833(1981), Japanese Unexamined Patent Publications Nos. 56-158140, 58-144304, Japanese Examined Patent Publications No. 58-55811, Japanese Unexamined Patent Publications Nos. 60-156546, 62-190107, 62-67003, 62-215504, 62-215505, 62-161706, 63-230606, 64-13002, 1-172306, 2-196703 and so on.

Such conventional microencapsulation process utilizing isocyanate compounds comprises mixing an isocyanate compound with a hydrophobic compound that is inert to the isocyanate group, dispersing the mixture in water or solvent to form dispersed particles and a continuous phase, and adding to the continuous phase a substance reactive with the isocyanate compound, whereby polymerization takes place at the interface between the dispersed particles and the continuous phase, and the isocyanate compound existing in the dispersed particles migrates to the surface of the particles to form a polymer on the surface of the particles. Thus polymeric microcapsule shells are formed, and a microcapsule dispersion enclosing the above-mixed core material (hydrophobic compounds) is obtained.

The shells of microcapsule slurry in water using known isocyanate compounds can be classified as below. Most of the known microcapsules can be classified into the following groups (1) to (3).

(1) Urea resin formed by polymerization of an isocyanate compound and a polyamine compound.
(2) Carbamic acid ester resin formed by polymerization of an isocyanate compound and a polyhydroxyl compound.
(3) Urea resin formed by polymerization of an isocyanate compound and water.

The method of group (1) involves a large pH variation due to the polyamine compound. In certain instances, the polyamine compound has the drawback of reacting with the core material or decomposing the core material. The shell films of the microcapsules obtained are relatively soft and the microencapsulation process has limited practical applications.

In the method of group (2), reactivity of the isocyanate compound with the hydroxyl group is relatively low, and occasionally the core material may interfere with the microcapsule shell film formation. The method is only employed for producing microcapsules of limited applications.

In the method of group (3), foaming is caused by liberation of carbon dioxide as a result of the reaction between the isocyanate compound and water, and the total volume is expanded to 2 to 10 times depending on the amount of the isocyanate compound used, so that agitation becomes difficult and productivity is sometimes markedly reduced. Further, since the reactivity of a high molecular weight isocyanate with water is very slow, it was considered that the reaction would hardly or very slowly proceed at room temperature. In order to complete the reaction, heating is necessary and in some instances addition of a catalyst for accelerating the reaction is necessary, and, depending on the core material, these treatments may occasionally cause the partial decomposition of the core material. Therefore, sometimes the original object of the material could not be achieved and the process fell short of practical value.

Conventionally, a microcapsule powder was obtained by dry spraying process. In this method, however, a dust of a microcapsule powder was dispersed into the air, which could be hazardous to workers' health, particularly when the microcapsule powder is of toxic nature. Also the recovery rate of the microcapsule powder was insufficient.

JP-B-47 43740 discloses a process for coating microdroplets of a hydrophobic liquid and a process for coating microdroplets of water or of a mixed liquid of water and a hydrophilic liquid. As an isocyanate compound a polyisocyanate compound mixture comprising a trimer of hexamethylene diisocyanate and an adduct of toluylene diisocyanate with trimethylpropane is used.

The invention relates to a method of microencapsulation of a hydrophobic material susceptible to decomposition and considered difficult to handle under a mild condition, and also to a process for obtaining mass producible microcapsule powder from a microencapsulated slurry in water at a low cost, and to a microencapsulated composition thereof.

DISCLOSURE OF THE INVENTION

According to the invention, there is provided a method for manufacturing microcapsules each comprising an urea resin shell and a hydrophobic chemical as a core material, the method comprising the steps of:

(a) mixing a hydrophobic chemical with an isocyanate compound to obtain a hydrophobic solution;
(b) dissolving in water a polymeric dispersant having hydroxyl groups in the molecule to obtain an aqueous solution;
(c) mixing the hydrophobic solution obtained in the step (a) with the aqueous solution obtained in the step (b) to produce a dispersion wherein the hydrophobic solution is dispersed in water; and
(d) reacting the isocyanate compound in the dispersion with water at a temperature below 40°C to obtain microcapsules in the form of a slurry,
wherein said hydrophobic chemical as a core material is a compound represented by the following formula

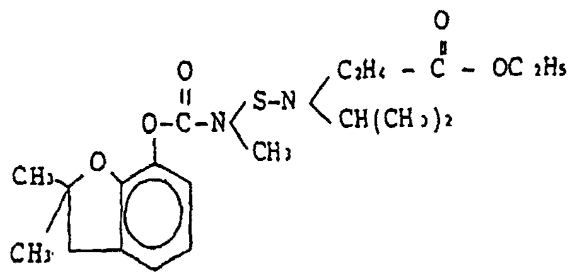

and wherein said isocyanate compound is one isocyanate compound selected from the group consisting of 2,4-tolylene diisocynate, 4,4-diphenylmethane diisocyanate, dianisidine diisocyanate, hexamethylene diisocayanate, meta xylylene diisocyanate, triphenyl methane triisocyanate, isophorone diisocyanate, a dimer or trimer of isocyanates from the above isocayanate compounds, polyol modified isocyanate prepolymers, carbodiimide modified isocyanate prepolymers and polymeric 4,4-diphenylmethane diisocyanate. In step (c) a dispersion is obtained in which the hydrophobic solution is in the form of microparticles of the size of 0.5-50 microns and the aqueous phase is the continuous phase.
In step (d) the dispersion is preferably agitated at room temperature.
(e) If necessary, a stable microcapsule dispersion can be prepared by adding a thickener and other auxiliaries to the obtained microcapsule slurry.
(f) After the process (d), the microcapsules in wet cake state (with water) are obtained by centrifugal sedimentation or filtration. The microcapsule powder is obtained by drying at room temperature or with heating under normal or reduced pressure.

To achieve microencapsulation at temperatures below 40 °C, preferably at room temperature (about 10-30 °C), according to the present invention, it is necessary to include polymeric dispersants having hydroxyl groups in the molecule. Through its chemical theory has not been elucidated yet, the polymeric dispersants with hydroxyl groups promote the polymerization of the isocyanate compound with water even at room temperature, and further the above polymeric dispersants are mostly adsorbed on the surface of hydrophobic particles in the polymerization process to constitute a part of capsule's shell walls by the reaction of a part of the polymeric dispersants with the isocyanide compound. In the process of obtaining a microcapsule powder, filtration is necessary, and the control of the particle size of microcapsules is important. It is necessary to control the particle diameter to be no less than 0.5 microns, preferably 1 microns or greater and 50 microns or smaller. For controlling the particle size within the above range, the polymeric dispersants with hydroxyl groups in the molecule have a remarkable effect. The particle size can easily be controlled by adjusting the amount of dispersants, though this is dependent on the type of polymeric dispersant with hydroxyl groups in the molecule employed.
When other types of dispersants are used, the polymerization reaction either slows down or come to a halt. Therefore, heating becomes necessary. Such heating process may cause decomposition of the core materials. Reaction can be advanced rapidly by heating and excessive foaming could occur due to liberation of carbon dioxide in a short time. As a result, heating operation can be employed only when the formulation uses a small amount of the isocyanate compound (formulations that use reduced amount of active components or that produce extremely thin shell wall).
On the other hand, microencapsulation process using polymeric dispersants with hydroxyl groups in the molecule has heretofore been proposed. Japanese Unexamined Patent Publication No. 62-215504 or the like discloses a microencapsulation process using polyvinyl alcohol (PVA). However, to advance the polymerizing reaction, the process requires heating operation (about 60 °C), and consequently it is necessary to limit the amount of the isocyanate compound in the total volume to a low level (ca. 0.7%). At such low ratio of isocyanate to core material, microcapsules with sufficient shell wall strength cannot be obtained. Furthermore, the heating operation sometimes spoils the core material, which makes the process unsuitable for general uses.

The fact that microencapsulation can be achieved at a reaction temperature of 40 °C or below by the employment of polymeric dispersants with hydroxyl groups within the molecule is a matter unexpected to the persons skilled in the art, and is the knowledge newly acquired by the inventor of the present invention.

The method according to the present invention can be applied to materials that are hydrophobic and relatively inactive to the isocyanate compound, and achieves the following advantages.

(1) It is possible to microencapsulate materials which are relatively liable to decompose or be spoiled.
(2) High concentration of microcapsules is obtained on the basis of isocyanate compound.
(3) Microcapsules are obtainable in high yield with ease.

The method according to the present invention is extremely superior as a means to impart a long life stability to unstable chemicals, since it has an effect to suppress not only decomposition in the formulating process but also decomposition of the formulated materials when applied to unstable chemicals.

The hydrophobic compounds microencapsulatable as a core material according to the present invention is a compound represented by the following formula

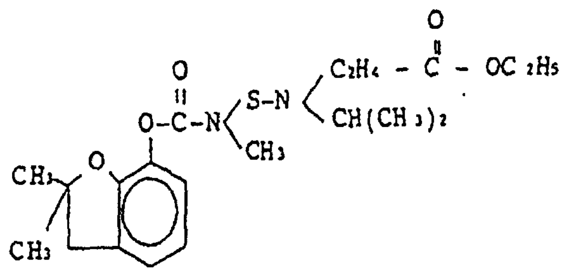

Isocyanate compounds that are used in the present invention are those which have preferably two or more isocyanate groups and are the following isocyanate compounds shown by a composition of monomer, i.e., 2, 4-tolylene diisocyanate (TDI), 4, 4'-diphenylmethane diisocyanate (MDI), dianisidine diisocyanate, hexamethylene diisocyanate (HMDI), meta xylylene diisocyanate, triphenyl methane triisocyanate, isophorone diisocyanate and so on. In addition, the isocyanate compounds could be dimer or trimer of isocyanates from the above isocyanate compounds, polyol modified isocyanate prepolymers (Desmodur L: Bayer Company), carbodiimide modified isocyanate prepolymers (Lupronate MM-103: Takeda Badische Urethane Industry Company), Polymeric MDI (crude MDI) and so on.

The polymeric dispersants with hydroxyl groups in the molecule used according to the invention are water-soluble polymeric dispersants and their derivatives such as hydroxyethyl cellulose (HEC), hydroxypropyl cellulose and so on and polyvinyl alcohols (PVA) and their derivatives. These polymeric dispersants are known to range from low to high molecular weight and have varied ratios of hydroxyl group but all of these compounds are usable. Some of these derivatives added with carboxyl groups are known and such derivatives can also be used, and alkali salts of these can also be used.

The emulsifying machine used in the invention is high speed turbines (e.g., a T.K. Homomixer manufactured by Tokushu Kikai Kogyo Company), sandmills (Viscomill: Aimex Company), colloidal mills and so on. A mixture of hydrophobic dispersion and aqueous polymeric dispersant solution may be put in the high-speed emulsifying machine of this kind for agitation, or one of them may be put therein first and the other may be added later with the high speed emulsifying machine being operated. The emulsifying machine of this kind often evolves heat, so the temperature is kept below 40 °C, preferably within 10 to 30 °C, by cooling. The size of the hydrophobic particles is determined by the type of equipment used, the emulsifying temperature and the amount of the polymeric dispersant. Particle size can be controlled to the range of 0.5 to 100 microns with ease.

Dispersing by the emulsifying machine can be done in a short time. Reaction between the isocyanate compound and water proceeds only slightly in the machine. The obtained dispersion is mixed at a slow speed by means of a normal turbine agitator, and the isocyanate will start to react gradually with water. As a weak heat evolution is observed, temperature is maintained below 40 °C, preferably at room temperature, with cold water. During the reaction, while it is dependant on the amount of the isocyanate compound used, foaming and concomitant volume expansion are caused by liberated carbon dioxide gas. Antifoaming agent is added dropwise, and then the original volume is substantially restored. The reaction is normally completed in 1 to 36 hours, and a microcapsule slurry is obtained. The obtained microcapsule slurry tends to sediment, and in some cases, a stable non-sedimentary microcapsule dispersion is obtained by raising the viscosity with use of a thickener.

Antifoaming agents suitable are mainly silicone type antifoaming agents (e.g., dimethyl silicone oil), higher alcohol type antifoaming agents (e.g., 2-octanol), mineral oils and so on, and further they may be mixtures of these, and their modifications with other additives (silica powder, surfactants) and so on. Antifoaming agents can be added directly. Alternatively it may be added continuously after being diluted (or dispersed) with water or other solvents. They can also be added after being divided into several portions.
In the pulverization in the method according to the present invention, wet cakes of microcapsules are obtained by centrifugal sedimentation (or static precipitation) or filtration of the microcapsule slurry. The above wet cake material, though dependant on wall thickness of the microcapsule and the type of isocyanate compound, do not form lumps by cohesion of microparticles even after dried, and can be pulverized down to the size of microcapsule particles. The reason therefor is that the microcapsule shell wall resin is formed by urea bonds formed upon reaction with water, and hence the obtained polymeric film is extremely rigid, and much harder than the urea resin film resulting from the reaction of an isocyanate compound with an amine compound. The provision of the power according to the method of the present invention is achieved economically and more easily than any other method. An embodiment of the present invention will hereinafter be described but the present invention is not limited to the embodiments. Unless otherwise indicated, the weight unit is in gram.

Comparison Example 1

Microcapsules of mold releasing agent : hindered ester oil (Composition No. 1)

Formulation

| | | |
|---|---|---|
| Denka Poval B-45 (2.5%) | 1200 | PVA manufactured by Denki Kagaku product Company |
| SN Defoamer 369 | 2 | defoamer manufactured by SAN NOPCO LTD. |
| Unistar (ester oil) H381 | 1350 | core material manufactured by Nihon Oil and Fat Company dissolve at 45°C |
| Lupranate MS | 450 | manufactured by Takeda Badische Company |

NCO 33.5%, MDI isocyanate monomer

| | | |
|---|---|---|
| SN Defoamer 458 | 5 | defoamer manufactured by SAN NOPCO ltd. |
| Water | 160 | mix |

Denka poval B-45 (2.5%) and SN defoamer 369 above were placed in a 10 liter vessel. Unistar H-381 and

Lupranate MS mixture (45 °C) were added thereto and the whole liquid was emulsified by a high-speed agitating with a T.K. Homomixer. The liquid temperature at this time was 33 °C. SN defoamer 458 dispersion was continuously added dropwise under low-speed agitation by an agitator for one hour. Then, the agitation was continued for 10 hours with the liquid temperature being held at 25 °C. Test was conducted to quantitate isocyanate group using dibutylamine but no isocyanate group was detected, which proved the completion of the reaction. The emulsion was filtered with a 100 mesh nylon cloth and had properties of pH 6.3, viscosity (60rpm) 90cps and retained 0.5 g of gel.

Then the viscosity was raised to 920cps with a thickener (PVA) and the pH was adjusted to 8.9 with ammonia aqueous solution. Non-volatile was 52.8%. The obtained microcapsule dispersion was applied to a PET film by a barcoater (No.12) and dried, giving a turbid coated film. Under a microscope at a magnification of x 150, particles of about 10 microns were observed. Two coated films were placed under a weight of 500 g/cm2 face to face and put in a thermostatic chamber maintained at about 50 °C to check blocking resistance. No blocking occurred.

Comparison Example 2

Microcapsules of fragrance : Hinoki oil (Composition No.2)

Formulation

| | | |
|---|---|---|
| Denka Poval B-45 (5%) | 5 | |
| Water | 170 | |
| Hinoki Oil | 15 | core material manufactured by Inoue Fragrance Company |
| Xylene | 30 | dissolve and mix |
| Lupranate M-20S | 450 | NCO:31% manufactured by Takeda Badische Company |

Denka poval B-45 and water were placed in a 500 ml beaker, and a mixture of Hinoki oil, xylene and Lupranate M-20S was added thereto under high-speed agitation by the T.K. Homomixer, and the mixture was homogenized and dispersed at 30 °C for 30 seconds. 0.2 of SN defoamer 458 was added under a low-speed agitation by an agitator. The liquid temperature was maintained at 25 °C for 15 hours. The average diameter of the particles was about 10 microns. The microcapsule slurry was suction filtered using Toyo filter paper No.2 under depressurized condition to obtain wet cake material. The wet cake was dried for 24 hours at 50 °C to give 44 g of microcapsule powder. Recovery rate was 98%.

Comparison Example 3

Microcapsules of citrus fruit fragrance : D-limonene (Composition No. 3)

| | | |
|---|---|---|
| Formulation | | |
| Denka Poval B-45 (5%) | 5 | |
| Water | 340 | |
| D-Limonene | 60 | dissolve and mix |
| Lupranate M-20S | 60 | |

Following the procedure similar to the processing carried out in Comp. Example 2, a wet cake material of the microcapsule slurry was obtained. The cake material was dried for 4 hours at 30 °C, crushed in a mortar and sifted, giving 110 parts of microcapsule powder. Recovery rate was 92%.

Comparison Example 4

Microcapsules of algicide : 3,4-dichlorophenylisothiocyanate (chemical formula 1) (Composition No. 4)

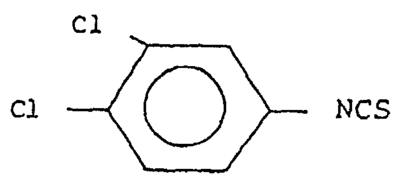

(1)

1) Formulation

| | | |
|---|---|---|
| Denka Poval B-45 (5%) | 10 | |
| Water | 340 | |
| compound indicated by chemical formula 1 | 30 | |
| Lupranate M-20S | 30 | dissolve and mix |
| Neostan U-28 | 2 | manufactured by Nitto Kasei Company |

Following the procedure similar to the processing carried out in Comparison Example 2, a cake material was dried for two days at room temperature, and dried for five hours at room temperature under depressed condition, giving

54 parts of a microcapsule powder. Analysis by gas chromatography (column : OV-1) indicated that the active component, the compound of the formula 1, contained in the powder was 44.8% (recovery rate 95%).

2) Elution test

Elution test was conducted on microcapsule powder using Isopal G (aliphatic solvent EXXON Chemical company) which dissolves the compound of the chemical formula 1 in an optional rate. 0.12 of the capsule powder was added to 10ml of Isopal G, and the mixture was maintained at room temperature or at 40 °C for 12 hours, and the amount of the compound of the chemical formula 1 eluted from the microcapsules was determined by gas chromatography. The rate of elution (active ingredient in Isopal G/added amount of active ingredient) was calculated.

| | |
|---|---|
| Unencapsulated | 100% elution |
| Composition No.4 maintained at 25 °C | 15% elution |
| Composition No.4 maintained at 40 °C | 28% elution |

It was confirmed from the results that the microencapsulation inhibits the elution.

Comparison Example 5

Microcapsules of reaction catalyst : Dibutyl tin laurate (Composition No.5)

Formulation

| | | |
|---|---|---|
| Denka Poval B-45 (5%) | 18 | |
| Water | 600 | |
| Toluene | 120 | mix |
| Dibutyl tin laurate | 60 | |
| Crude MD1 | 60 | NCO 30% manufactured by Aika Kogyo Company |
| SN-Defoamer 369 | 0.1 | |

Following the procedure similar to the processing carried out in Comparison Example 2, 574 parts of a wet cake material were obtained and dried at room temperature for two days and dried for 8 hours at 50 °C, giving 115 parts of a powder.

Comparison Example 6

Microcapsule of slime controlling agent : Tetrachlorotetrahydrothiophene-1,1-dioxide (chemical formula 2) (Composition No.6)

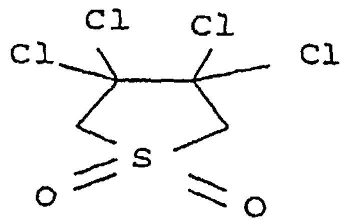

(2)

Physical properties of the compound of the chemical formula 2: white powder, melting point of about 165 °C, and water solubility (25 °C) of about 900 ppm

1) Microencapsulation process

Formulation

| | | |
|---|---|---|
| Denka poval B-45(5%) | 400 | |
| Water | 2600 | |
| Compound of formula 2 (active ingredient. 98%) | 392 | mixed solution |
| Toluene | 1550 | |
| Crude MDI | 388 | NCO 30% manufactured by Akira Kogyo Company |
| Neostan U-28 | 13 | |
| SN-defoamer 369 | 0.5 | |
| Water | 5000 | |

Denka poval B-45 above and water were placed in a 10-liter vessel, and mixed solution was added under agitation by a low-speed agitator, and the resulting mixture was further agitated for about 3 minutes. The mixture was processed by an emulsifying machine : Milder (manufactured by Ebara Seisakusho Company) for emulsification and dispersion. The processed liquid was agitated by a low-speed agitator for 20 hours at 20 °C. When there was some foaming during processing, SN-defoamer 369 was added thereto. Water (5000) was poured into the microcapsule slurry. After the liquid was left to stand for one day, microcapsules were precipitated. Upper water was decanted and the sediment was suction filtered with a filter paper (Toyo Filter paper No.2) to obtain a wet cake material. The cake was first dried for 4 days at room temperature and then 4 hours at 50 °C. 748 parts of light yellowish powder of microcapsules were obtained. Analyses by gas chromatography (column : OV-17) indicated the compound represented by the chemical formula 2 of 43.1%, and the compound represented by chemical formula 3 of 5.3%. Recovery of active ingredients was 94.2%. Chemical formula 3 is as below.

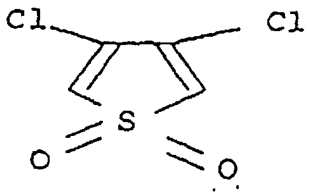

(3)

2) Skin primary irritation test

Six medically inspected Japan white breeding rabbits (conventional) were given a haircut along the spine and 6 spots of 2x3 cm each were closed patched with 0.5 g of Composition No.6 powder or 0.25 g of a powder of the compound represented by chemical formula 2 using bandage and gauze. Evaluation was conducted for the degree of erythema, scab formation and edema formation at a time interval of after 4 hours, 1 day, 2 days, 3 days, 4 days and 5 days.

Evaluation standard (Draize method)

| A. Erythema, scab formation | |
|---|---|
| no erythema | 0 |
| Very light erythema (barely detectable) | 1 |
| Distinct erythema | 2 |
| Medium to beet redness | 3 |
| Beet redness to slight scab formation (deep damage) | 4 |

| B. Edema formation | |
|---|---|
| No edema | 0 |
| Very light edema (barely detectable) | 1 |
| Light edema (definite margin discernible by distinct swelling) | 2 |
| Medium edema (about 1mm swelling) | 3 |
| Intense edema (1mm swelling and extension beyond the exposed area) | 4 |

From the above table, the following primary irritancy was obtained. Irritation index was obtained from Equation 1. Irritation index was obtained from the following table. Irritation index and safety classification are as follows.

$$\text{Irritation Index} = \frac{\text{Total erythema points + Total edema points}}{\text{6 (Animals)}}$$

| Safety classification | Irritation index |
|---|---|
| Weak irritation | 0 ~ 2 |
| Medium irritation | 3 ~ 5 |
| Intense irritation | 6 ~ 8 |

The results shown in the following table indicates that skin irritation is greatly reduced by microencapsulation.

| 4 hours | 1 day | 2 days | 3 days | 4 days | 5 days | classification |
|---|---|---|---|---|---|---|
| composition No.6 | 1.00 | 0.67 | 0.67 | 0.67 | 0.55 | weak irritation |

(continued)

| 4 hours | 1 day | 2 days | 3 days | 4 days | 5 days | classification |
|---|---|---|---|---|---|---|
| Chemical 2 alone | 7.22 | 7.22 | 7.15 | 7.15 | 6.17 | intense irritation |
| Bandage alone | 0 | 0 | 0 | 0 | 0 | weak irritation |

Comparison Example 7

Microcapsules of antifouling agent for ship : 4,5-Dichloro-2-n-octyl-4-isothiazoline-3-one (chemical formula 4) (Composition No.7)

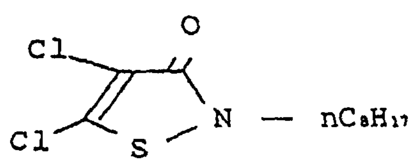

(4)

Physical properties of the compound of the chemical formula 4 : brown solids, melting point of 40 to 41°C, and solubility in water (25°C) of 6 ppm 1)

Microencapsulation

Formulation

| | | |
|---|---|---|
| Denka Poval B-45 (5%) | 25 | |
| Water | 600 | |
| Chemical 4 (85% active ingredient) | 60 | |
| Neostan U-28 | 2 | dissolve and mix |
| Takenate D102 | 80 | manufactured by Takeda Chemical Industry |

NCO 13%, solids 75%, ethyl acetate solution, TDI adduct

Following the procedure similar to the processing carried out in Comparison Example 6, 115 parts of light brown powder were obtained. Analysis by gas chromatography (column OV-17) indicated 41.3% of active ingredient. Recovery rate was 93.1%.

2) Skin irritation test

Evaluation was conducted according to the method employed in Comparison Example 6.

| | |
|---|---|
| Composition No.7 | weak irritation |
| Compound of formula 4 | strong irritation |

The above results indicate that the microencapsulation is effective for reducing drastically skin irritation.

Example 1

Microcapsules of agricultural insecticide : ethyl N-[2,3-dihydro-2,2-dimethylbenzofuran-7-yloxycarbonyl (methyl)-aminothio]-N-isopropyl-β-alanate (chemical formula 5) (Composition No.8)

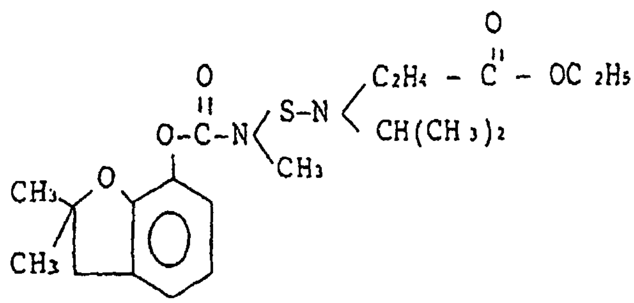

(5)

Physical properties of the compound of the chemical formula 5: light yellow viscous liquid, bp 110 °C under the condition of (2.5/ 10,000,000mm Hg), and solubility in water of 8ppm

1)Microencapsulation

Formulation

| | | |
|---|---|---|
| Fujhec AL-15 (15% solution) | 18 | HEC manufactured by Fuji Chemical Industry Company. |
| Water | 45 | |
| Compound of formula 5 (92% active ingredient) | 60 | dissolve |
| Crude MDI | 12 | |
| Fujhec AW-15 (3% solution) | 18 | HEC manufactured by Fuji Chemical Company |

The above materials were placed in a 300ml beaker, and emulsified by the T.K. Homomixer for 5 minutes at room temperature, followed by agitation at low speed for 12 hours at 25 °C. The viscosity was adjusted to 2000 cps (B type rotational viscometer 60rpm) with Fujhec AW-15 (3% solution, hydroxyethylcellulose thickener), and 165 parts of microcapsule dispersion were obtained. Analysis by high-speed liquid chromatography indicated an active ingredient of the compound of the chemical formula 5 is 33.2%, average particle diameter 5.8 microns, pH 7.9. Recovery rate was 99.2%.

2) Evaluation

The evaluation was conducted in the same manner as the test method used for blocking resistance in Comparison Example 1. No blocking was observed. After the material was stored for one month at 54 °C, storage stability was tested. Decomposition rate of active ingredient (proportion of the compound decomposed which was calculated from the ratio of active ingredient content after storage test / active ingredient before storage test) of the compound of chemical formula 5 was 7.3%.

Comparison Example 8

Microcapsules of agricultural insecticide : 2,3-dihydro-2/2-dimethylbenzofuran-7-yl-methylcarbamate (chemical formula 6) (Composition No.9)

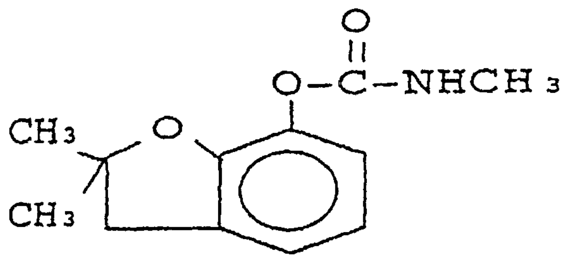

(6)

Physical properties of the compound of the chemical formula 6: white powder, melting point of 150 to 152 °C, bp 33°C (22/100,000mmHg), and solubility in water of 700ppm

The procedure similar to Example 6 was carried out except that the compound of the chemical formula 2 was replaced by the compound of the chemical formula 6 and its formulation was reduced to 1/10 scale. 72 parts of light yellow powder were obtained. Active ingredient was 44.3%, and active ingredient recovery rate was 83%.

Comparison Example 9

Microcapsules of algicide for a fishing net and ship : thiocyano methylthiobenzothiazol (Chemical formula 7) (Composition No. 10)

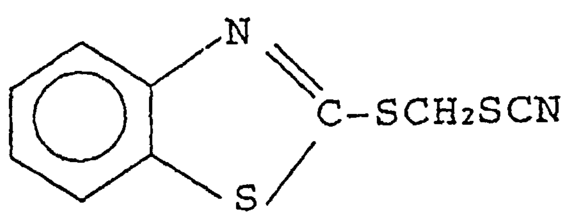

(7)

Physical properties of the compound of the chemical formula 7: dark brown liquid, and solubility in water of 100ppm.

1) Microencapsulation

| Formulation | | |
|---|---|---|
| Denka Poval B-45 (5%) | 18 | |
| Water | 600 | |
| Toluene | 120 | mix and dissolve |
| compound of the chemical formula 7 | 60 | |
| Crude MDI | 60 | |
| Neostan U-28 | 1 | |

The procedure similar to that of Comp. Example 6 was carried out and 114.5 parts of light yellow microcapsule powder were obtained. Analysis by gas chromatography (column OV-1) indicated that active ingredient of the compound of the chemical formula 7 was 48.6%.

2) Skin irritation test

| | |
|---|---|
| Composition No.10 | weak irritant |
| Compound of the chemical formula 7 alone | medium irritant |

The above results indicate that skin irritation is reduced by microencapsulation.

Comparative Example 10

Microencapsulation of the compound of the chemical formula 2 using a polyamine

| Formulation | | |
|---|---|---|
| Denka Poval B-45 (5%) | 400 | |
| Water | 2600 | |
| Hexamethylene diamine (40% aqueous solution) | 150 | |
| compound indicated by chemical formula 2 (98% active ingredient) | 392 | mix and dissolve |
| Toluene | 1550 | |
| Crude MDI | 388 | |
| Neostan U-28 | 13 | |
| Water | 5000 | |

725 parts of microcapsule powder were obtained by the procedure similar to that of Comp. Example 6. The analysis by gas chromatography (column : OV-17) revealed that the compound indicated by chemical formula 2 was 29.6% and the compound indicated by chemical formula 3 was 18.6%. There was a conspicuous increase in the compound of the chemical formula 3. This shows that hexamethylene diamine caused the dehydrochloric acid reaction in the compound of the chemical formula 2 to thereby decompose the compound of the chemical formula 2. Also, substantially the total amount of hexamethylene diamine hydrochloride was detected in the filtrate, showing that hexamethylene diamine does not contribute to microencapsulation.

Comparative Example 11

Microencapsulation reaction step conducted at a high temperature

Low-speed agitation in Example 1 was conducted at 50 °C and there was a rapid foam evolution, which expanded the liquid volume two times, and one half of the liquid overflowed the beaker (4 times expansion). Otherwise the process was the same. Active ingredient of the compound of the chemical formula 5 was 29.8%. Study of storage stability after one month at 54 °C reveals that a decomposition rate of the active ingredient was 35.5%. This shows that microencapsulation at a high temperature causes severe foam evolution, lower productivity and marked progress of active ingredient decomposition.

Comparative Example 12

Use of a dispersant other than the dispersants with hydroxyl groups in the molecule

The procedure similar to that of Example 1 was carried out except that 18 parts of "Fujhec AL-15" (10% solution) was replaced by 18 parts of Emulgen 810 (10% aqueous solution). The obtained slurry dispersion did not have blocking resistance. Accordingly, this shows that microencapsulation was not performed. Emulgen 810" is a surfactant based on octylphenyl ethyleneoxide adduct manufactured by Kao Co. Ltd.

INDUSTRIAL APPLICABILITY

As described above, it is possible to microencapsulate ethyl-N[2,3-dihydro-2,2-dimethylbenzofuran-7-yloxycarbonyl (methyl)-aminothio)-N-isopropyl-β-alanate which is relatively liable to decompose or be spoiled. Microcapsules with high concentration is obtained on the basis of isocyanate compound. Microcapsule powders can be obtained in high yield with ease. Particularly, when the method according to the present invention is applied to said unstable chemical , the method can provide an effect to suppress decomposition of the unstable chemical during its formulating process and even after its formulating process. Therefore, the method is superior in imparting long-life stability to ethyl-N[2,3-dihydro-2,2-dimethylbenzofuran-7-yloxycarbonyl(methyl)-aminothio]-N-isopropyl-β-alanate.

## Claims

**1.** A method for manufacturing microcapsules each comprising an urea resin shell and a hydrophobic chemical as a core material, the method comprising the steps of:

(a) mixing a hydrophobic chemical with an isocyanate compound to obtain a hydrophobic solution;

(b) dissolving in water a polymeric dispersant having hydroxyl groups in the molecule to obtain an aqueous solution;

(c) mixing the hydrophobic solution obtained in the step (a) with the aqueous solution obtained in the step (b) to produce a dispersion wherein the hydrophobic solution is dispersed in water; and

(d) reacting the isocyanate compound in the dispersion with water at a temperature below 40°C to obtain microcapsules in the form of a slurry,

wherein said hydrophobic chemical as a core material is a compound represented by the following formula

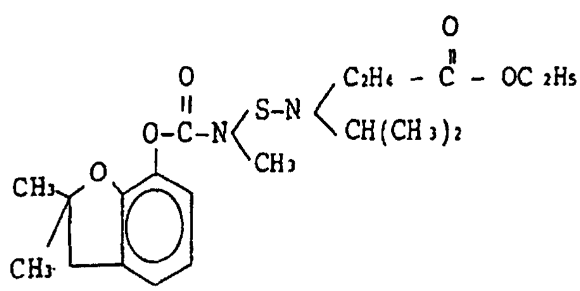

and wherein said isocyanate compound is one isocyanate compound selected from the group consisting of 2,4-tolylene diisocynate, 4,4-diphenylmethane diisocyanate, dianisidine diisocyanate, hexamethylene diisocayanate, meta xylylene diisocyanate, triphenyl methane triisocyanate, isophorone diisocyanate, a dimer or trimer of isocyanates from the above isocayanate compounds, polyol modified isocyanate prepolymers, carbodiimide modified isocyanate prepolymers and polymeric 4,4-diphenylmethane diisocyanate.

**2.** A method according to claim 1, wherein an anti-foaming agent is used.

**3.** The method according to claim 1 or 2, wherein the isocyanate compound is polymeric 4,4-diphenylmethane diisocyanate.

**4.** A method for manufacturing microcapsules according to any of claims 1 to 3, wherein the microcapsule slurry obtained in the step (d) is filtered and then dried to recover a microcapsule powder.

## Patentansprüche

1. Ein Verfahren zur Herstellung von Mikrokapseln, wobei jede aus einer Umhüllung aus Harnstoffharz und einem Kernmaterial aus einer hydrophoben chemischen Verbindung besteht, und das Verfahren folgende Stufen umfaßt:

   a) Vermischen einer hydrophoben chemischen Verbindung mit einer Isocyanatverbindung, um eine hydrophobe Lösung zu erhalten;
   b) Auflösung eines polymeren Dispergierungsmittels mit Hydroxidgruppen im Molekül in Wasser, um eine wässerige Lösung zu erhalten;
   c) Vermischen der in Stufe a) erhaltenen hydrophoben Lösung mit der in Stufe b) erhaltenen wässerigen Lösung um eine Dispersion herzustellen, in der die hydrophobe Lösung in Wasser dispergiert ist; und
   d) Umsetzung der Isocyanatverbindung in der Dispersion mit Wasser bei einer Temperatur unter 40°C, um Mikrokapseln in Form einer Aufschlämmung zu erhalten,

   wobei die hydrophobe chemische Verbindung als Kernmaterial eine Verbindung der folgenden Formel ist:

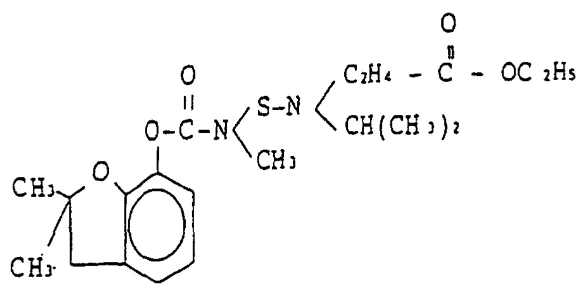

   und wobei die Isocyanatverbindung eine Isocyanatverbindung der Gruppe ist: 2,4-Tolylendiisocyanat, 4,4-Diphenylmethandiisocyanat, Dianisidindiisocyanat, Hexamethylendiisocyanat, m-Xylylendiisocyanat, Triphenylmethantriisocyanat, Isophorondiisocyanat, ein Isocyanatdimer oder -trimer der oben genannten Isocyanatverbindungen, Polyol-modifizierte Isocyanat-Vorpolymere, Carbodiimid-modifizierte Isocyanat-Vorpolymere und polymeres 4,4-Diphenylmethandiisocyanat.

2. Ein Verfahren nach Anspruch 1, wobei ein Antischaummittel verwendet wird.

3. Ein Verfahren nach Anspruch 1 oder 2, wobei die Isocyanatverbindung ein polymeres 4,4-Diphenylmethandiisocyanat ist.

4. Ein Verfahren zur Herstellung von Mikrokapseln nach einem der Ansprüche 1 bis 3, wobei die in Stufe d) erhaltene Mikrokapselaufschlämmung filtriert und dann getrocknet wird, um ein Mikrokapselpulver zu gewinnen.

## Revendications

1. Procédé de fabrication de microcapsules comprenant chacune une enveloppe en résine à base d'urée et une substance chimique hydrophobe constituant le coeur, ledit procédé comprenant les étapes consistant à :

   (a) mélanger une substance chimique hydrophobe avec un composé isocyanate afin d'obtenir une solution hydrophobe ;
   (b) dissoudre dans de l'eau un agent dispersant polymère dont la molécule contient des groupes hydroxyles afin d'obtenir une solution aqueuse ;
   (c) mélanger la solution hydrophobe obtenue à l'étape (a) avec la solution aqueuse obtenue à l'étape (b) afin de produire une dispersion dans laquelle la solution hydrophobe est dispersée dans l'eau ; et
   (d) faire réagir le composé isocyanate dans la dispersion avec de l'eau à une température-inférieure à 40°C afin d'obtenir des microcapsules sous la forme d'une suspension épaisse,

   procédé dans lequel ladite substance chimique hydrophobe formant le coeur est un composé représenté par la formule suivante :

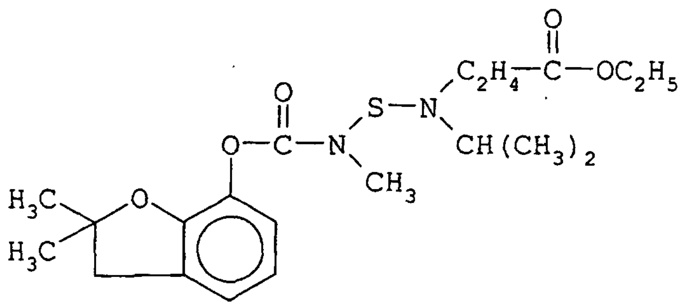

et dans lequel ledit composé isocyanate est un composé isocyanate choisi dans le groupe constitué par le diisocyanate de 2,4-tolylène, le diisocyanate de 4,4-diphénylméthane, le diisocyanate de dianisidine, le diisocyanate d'hexaméthylène, le diisocyanate de méta-xylylène, le triisocyanate de triphénylméthane, le diisocyanate d'isophorone, un dimère ou un trimère d'isocyanates parmi les composés isocyanates ci-dessus, des prépolymères d'isocyanates modifiés par un polyol, des prépolymères d'isocyanates modifiés par un carbodiimide et le diisocyanate de 4,4-diphénylméthane polymère.

**2.** Procédé selon la revendication 1, dans lequel un agent antimousse est utilisé.

**3.** Procédé selon la revendication 1 ou la revendication 2, dans lequel le composé isocyanate est le diisocyanate de 4,4-diphénylméthane polymère.

**4.** Procédé de fabrication de microcapsules selon l'une quelconque des revendications 1 à 3, dans lequel la suspension épaisse de microcapsules obtenue à l'étape (d) est filtrée et ensuite séchée afin de recueillir une poudre de microcapsules.